# EUROPÄISCHE PATENTSCHRIFT

(11) **EP 3 259 113 B1**
(45) Veröffentlichungstag und Bekanntmachung des Hinweises auf die Patenterteilung: **05.12.2018**
(21) Anmeldenummer: 16717535.5
(22) Anmeldetag: 17.02.2016
(51) Int. Cl.: B26D 1/04, B26D 3/16, B26D 7/14, A61J 1/10, B29C 65/02, B29L 31/00, B29C 65/00

(54) **ANLAGE SOWIE VERFAHREN ZUM HERSTELLEN EINES BEUTELS FÜR MEDIZINISCHE ZWECKE**
SYSTEM AND METHOD FOR PRODUCING A BAG FOR MEDICAL PURPOSES
SYSTÈME ET PROCÉDÉ DE FABRICATION D'UNE POCHE À USAGE MÉDICAL

(30) Priorität: 20.02.2015 DE 102015002005
(43) Veröffentlichungstag der Anmeldung: 27.12.2017
(73) Patentinhaber: Kiefel GmbH, 83395 Freilassing (DE)
(72) Erfinder: STEIN, Bernd, 83417 Kirchanschöring (DE)
(74) Vertreter: Farago-Schauer, Peter Andreas
(86) Internationale Anmeldenummer: PCT/DE2016/000058
(87) Internationale Veröffentlichungsnummer: WO 2016/131438

(56) Entgegenhaltungen:
- BE-A- 883 828
- US-A1- 2004 123 883
- US-A1- 2014 138 024

## Beschreibung

Die Erfindung betrifft einerseits eine Anlage zum Herstellen eines Beutels für medizinische Zwecke umfassend eine Schlauchübergabestation mit einem Übergabemittel zum Übergeben eines der Schlauchübergabestation zulaufenden Schlauchs an einen Halter und zum dortigen Abtrennen eines an den Halter übergebenen Schlauchstücks von einem Restschlauch des zulaufenden Schlauchs, um anschließend das abgetrennte Schlauchstück mit zwei Folienlagen zum Bilden eines Zugangs an den Beutel verbindbar machen zu können.

Die Erfindung betrifft andererseits ein Verfahren zum Herstellen eines Beutels für medizinische Zwecke, bei welchem ein einer Schlauchübergabestation zulaufender Schlauch mittels eines Übergabemittels an einen Halter zum dortigen Abtrennen eines an den Halter übergebenen Schlauchstücks von einem Restschlauch des zulaufenden Schlauchs übergeben wird, so dass das Schlauchstück anschließend mit zwei Folienlagen zum Bilden eines Zugangs an dem Beutel verbunden wird.

Gattungsgemäße Anlagen und Verfahren, um ein einzelnes Schlauchstück, welches später Bestandteil eines Zugangs eines medizinischen Beutels ist, von einem Schlauch abzutrennen, sind aus dem Stand der Technik hinlänglich bekannt. Insbesondere ist bekannt, ein Schlauch zu einer Schlauchaufsteck- bzw. Schlauchübergabestation zu führen und dort in einzelne Schlauchstücke zu trennen.

Dabei werden einzelne Schlauchstücke von einem "Endlosschlauch" abgetrennt, um sie nachher vereinzelt an den Folien bereitstellen zu können. Hierzu wird ein Ende dieses Endlosschlauchs einem Halter zugeführt und dort fixiert, so dass ein dann von einem Restschlauch des Endlosschlauchs abgetrenntes Schlauchstück durch den Halter gehalten ist. Die so abgetrennten Schlauchstücke werden nach ihrem Abtrennen mittels einer entsprechend ausgebildeten Apparatur zwischen zwei Folien gelegt und anschließend mit den zwei Folien zu einem medizinischen Beutel verschweißt.

Es versteht sich, dass bereits bei der Herstellung derartiger medizinischer Beutel zwingend eine Verunreinigung durch Schmutz-, Material-, prozessbedingten Partikeln oder ähnlichem zu vermeiden ist, um die Gefahr einer Kontamination des später in dem medizinischen Beutel bevorrateten medizinischen Produkts zu reduzieren bzw. zur Gänze auszuschließen.

So offenbart die US 2004/123883 A1 eine zum Herstellen eines Beutels für medizinische Zwecke geeignete Anlage, umfassend eine Schlauchübergabestation mit einem Übergabemittel zum Übergeben eines der Schlauchübergabestation zulaufenden Schlauchs an einen Halter und zum dortigen Abtrennen eines an den Halter übergebenen Schlauchstücks von einem Restschlauch des zulaufenden Schlauchs, um das abgetrennte Schlauchstück anschließend mit zwei Folienlagen zum Bilden eines Zugangs an dem Beutel verbindbar machen zu können.

Die US 2014/138024 A1 zeigt ebenfalls eine Anlage zum Herstellen eines Beutels für medizinische Zwecke, wobei die Elektrode zum Einschweißen der Schläuche in die Folien segmentiert ist, um die Verschweißung durch Haupt- und Streufelder zu bewirken.

Der Erfindung liegt die Aufgabe zugrunde, insbesondere gattungsgemäße Anlagen zum Herstellen eines Beutels für medizinische Zwecke derart weiterzuentwickeln, dass die Gefahr von Verunreinigungen insbesondere an einem durch einen Schlauch formulierten Zugangs des Beutels reduziert ist.

Die Aufgabe der Erfindung wird von einer Anlage zum Herstellen eines Beutels für medizinische Zwecke umfassend eine Schlauchübergabestation mit einem Übergabemittel zum Übergeben eines der Schlauchübergabestation zulaufenden Schlauchs an einen Halter und zum dortigen Abtrennen eines an den Halter übergebenen Schlauchstücks von einem Restschlauch des zulaufenden Schlauchs gelöst, um das abgetrennte Schlauchstück anschließend mit zwei Folienlagen zum Bilden eines Zugangs an den Beutel verbindbar machen zu können, wobei die Schlauchübergabestation halterseits ein Schlauchzughaltemittel und andererseits ein Schlauchziehmittel aufweist, welche dazu eingerichtet sind, zwischen dem abgetrennten Schlauchstück und dem Restschlauch des zulaufenden Schlauchs Zugkräfte anzubringen, während das Abtrennen erfolgt.

Vorliegend ist die Schlauchübergabestation insbesondere derart ausgestaltet, dass ein an den Halter übergebenes und abzutrennendes Schlauchstück bereits vor dem Abtrennen zumindest temporär durch ein Schlauchzughaltemittel ortsfest an dem Halter fixiert wird.

Des Weiteren kann mittels der Schlauchübergabestation Zugkräfte in den so eingeklemmten beziehungsweise fixierten Schlauch eingebracht werden, so dass der zulaufende Schlauch zumindest in einem Schlauchbereich zwischen dem Übergabemittel und dem Halter vorgespannt an der Schlauchübergabestation bereitgestellt werden kann, wodurch wiederum das an dem Halter übergebene Schlauchstück von dem auf Seiten des Übergabemittels befindlichen Restschlauch des zulaufenden Schlauchs derart getrennt werden kann, dass durch den eigentlichen Trennvorgang signifikant weniger Schlauchmaterialrestpartikel in die Umgebung gelangen.

Mit anderen Worten bedeutet dies, dass während des Abtrennens weniger durch den Abtrennvorgang bedingte Schlauchmaterialrestpartikel erzeugt werden, so dass insgesamt hierdurch die Gefahr verringert ist, dass derartige Schlauchmaterialrestpartikel das abgetrennte Schlauchstück einerseits aber auch den Restschlauch des zulaufenden Schlauchs andererseits kontaminieren, wodurch die Gefahr verringert ist, dass derartige Schlauchmaterialrestpartikel letztendlich in das medizinische Produkt gelangen, welches in dem medizinischen Beutel bevorratet werden soll.

Kurz gesagt: Vorliegend ist es möglich, einen äußerst sauberen Schnitt an dem zulaufenden Schlauch durchzuführen.

Insofern wird die Aufgabe der Erfindung auch von einem Verfahren zum Herstellen eines Beutels für medizinische Zwecke gelöst, bei welchem ein einer Schlauchübergabestation zulaufender Schlauch mittels eines Übergabemittels an einen Halter zum dortigen Abtrennen eines an den Halter übergebenen Schlauchstücks von dem Restschlauch des zulaufenden Schlauchs übergeben wird, so dass das Schlauchstück anschließend mit zwei Folienlagen zum Bilden eines Zugangs an dem Beutel verbunden wird, wobei sich das Verfahren dadurch auszeichnet, dass insbesondere die folgenden Schritte durchgeführt werden, nämlich erstens Zuführen des zulaufenden Schlauchs zum Halter; zweitens zugfestes Halten des zulaufenden Schlauchs an dem abzutrennenden Schlauchstück auf Seiten des Halters mittels eines Schlauchzughaltemittels; drittens Längsziehen des zulaufenden Schlauchs zwischen dem Schlauchzughaltemittel und einer Zuführung, so dass eine Zugkräfte auf die designierte Stelle zum Abtrennen wirken; und viertens Abtrennen des Schlauchstücks von dem Restschlauch des zulaufenden Schlauchs.

Mittels dieses vorgeschlagenen Verfahrens ist es möglich, einen äußerst sauberen Schnitt an dem zulaufenden Schlauch durchzuführen, wodurch beim Durchtrennen signifikant weniger Schlauchmaterialrestpartikel erzeugt werden und in die Umgebung gelangen.

Hinsichtlich der vorliegenden Konstruktion kann der Halter in Abhängigkeit der Schlauchübergabestation, insbesondere des Übergabemittels, nahezu beliebig ausgestaltet sein.

Das dem Halter zugewandte Ende des zulaufenden Schlauchs beziehungsweise das abzutrennende Schlauchstück kann konstruktiv sehr einfach an den Halter übergeben werden, wenn der Halter einen Dorn aufweist, auf welchen der zulaufende Schlauch zumindest, teilweise aufgesteckt werden kann.

Insofern kann hinsichtlich der Schlauchübergabestation auch von einer Schlauchaufsteckstation gesprochen werden, wobei an dieser Stelle ausdrücklich betont sei, dass kein "Aufstecken" erforderlich ist, um die Erfindung zu verwirklichen, sondern dass schon das reine Übergeben des Schlauchendes an einen Halter ausreichen kann.

Eine bevorzugte Ausführungsvariante sieht in diesem Zusammenhang vor, dass der Halter eine dornförmige Zentralelektrode aufweist, mittels welcher das Schlauchstück an einer weiteren Bearbeitungsstation der vorliegenden Anlage sogleich mit Folienlagen des Beutels verschweißt werden kann.

Insofern ist es verfahrenstechnisch auch zweckmäßig, wenn das Zuführen des zulaufenden Schlauchs auf einen Dorn erfolgt, insbesondere auf eine Zentralelektrode.

Gegebenenfalls kann mittels einer dornförmigen Zentralelektrode der zulaufende Schlauch sogleich an der Schlauchübergabestation erwärmt werden, da sich gezeigt hat, dass das an den Halter übergebene Schlauchstück aufgrund von besseren Gleiteigenschaften im erwärmten Zustand wesentlich besser von dem Restschlauch des zulaufenden Schlauchs getrennt werden kann.

Genauer gesagt, durch ein Erwärmen des zulaufenden Schlauchs in einem Bereich der Trennstelle kann die Bildung von durch einen Trennschnitt bedingten Schlauchmaterialrestpartikeln weiter reduziert werden.

Es hat sich gezeigt, dass das zu übergebene Schlauchstück einfach auf diesen Dorn aufgesteckt werden kann, wenn der Außendurchmesser des Dorns auf den Innendurchmesser des zulaufenden Schlauchs derart kompatibel angepasst sein muss, dass das abgetrennte Schlauchstück bevorzugt schon allein aufgrund einer Reibschlussverbindung an dem Dorn gehaltert werden kann, so dass das abgetrennte Schlauchstück betriebssicher von der Schlauchübergabestation zu einer weiteren Bearbeitungsstation der Anlage zum Herstellen eines Beutels transportiert werden kann.

Damit aber auch höhere Zugkräfte in den zulaufenden Schlauch eingebracht werden können, ohne die Gefahr, dass sich das abzutrennende Schlauchstück von dem Halter beziehungsweise von dem Dorn beziehungsweise von der dornförmigen Zentralelektrode löst, ist es vorteilhaft, wenn der Halter eine von außen angreifende Schlauchklemme aufweist.

Ist der Halter in Einbringrichtung des zulaufenden Schlauchs fixiert, kann der zulaufende Schlauch mittels der Übergabemittel betriebssicher auf einen entsprechend ortsfest fixierten Dorn beziehungsweise auf eine entsprechend ortsfest fixierte dornförmige Zentralelektrode aufgesteckt und Zugkräfte in den zulaufenden Schlauch eingeleitet werden, ohne dass der Halter sich in Einbringrichtung bzw. in Hauptwirkrichtung der Zugkräfte nachteilig bewegt.

Somit bleibt der Halter mit dem daran befestigten abzutrennenden Schlauchstück ortsfest positioniert, wenn an dem zulaufenden Schlauch zum Aufbringen beziehungsweise zum Einbringen der Zugkräfte entgegen der Einbringrichtung gezogen wird.

Insofern sieht eine entsprechend vorteilhaft ausgestaltete Verfahrensvariante auch vor, dass der zulaufende Schlauch an einem abzutrennenden Schlauchstück mit dem Halter gegen Zurückziehen fixiert wird, vor allem von außen festgeklemmt wird.

Alternativ oder kumulativ könnte eine Klemmung auch durch einen radial aufspreizfähigen Dorn oder durch eine radial aufspreizfähige dornförmige Zentralelektrode erfolgen.

Radial bedeutet vorliegend im Allgemeinen quer zur Einbringrichtung des zulaufenden Schlauchs.

Es versteht sich, dass auch das vorliegende Übergabemittel nahezu beliebig ausgestaltet sein kann.

Eine weitere bevorzugte Verfahrensvariante sieht vor, dass das Zuführen des Schlauchs durch einen Durchführkanal erfolgt, wodurch das dem Halter zugewandte Ende des zulaufenden Schlauchs genauer vor dem Dorn beziehungsweise vor der dornförmigen Zentralelektrode positioniert werden kann.

Um den zulaufenden Schlauch beim Übergeben an den Halter beziehungsweise beim Aufstecken auf den Dorn beziehungsweise auf die dornförmige Zentralelektrode in radialer Richtung zur Einbringrichtung, also seitlich, präziser führen zu können, ist es somit entsprechend vorteilhaft, wenn das Übergabemittel einen Durchführkanal für den zulaufenden Schlauch aufweist.

Der zulaufende Schlauch kann besonders präzise an den Halter übergeben werden, wenn das Übergabemittel in Einbringrichtung vor- und zurückfahrbar ist.

Mit anderen Worten bedeutet dies, dass speziell das Übergabemittel gegenüber dem Halter translatorisch in eine Schlauchzustellrichtung und in eine Schlauchrückstellrichtung verlagerbar in der Schlauchübergabestation gelagert ist.

Eine besonders bevorzugte Ausführungsvariante sieht hierbei vor, dass das Übergabemittel dazu eingerichtet ist, den Durchführkanal nah an den Halter zu verfahren, dann den zulaufenden Schlauch zumindest mit dem abzutrennenden Schlauchstück zu übergeben, und nach Abtrennen des Schlauchstücks den Restschlauch des zulaufenden Schlauchs wieder durch den Durchführkanal hindurch von dem Halter zu entfernen.

Auch das im Sinne der Erfindung vorgeschlagene Schlauchziehmittel kann nahezu beliebig ausgestaltet sein.

Zweckmäßigerweise weist das Schlauchziehmittel einen Rückziehantrieb auf, so dass der an dem Halter durch die von außen angreifende Schlauchklemme geklemmte zulaufende Schlauch entgegen die Einbringrichtung bzw. die Schlauchzustellrichtung und damit in Schlauchrückstellrichtung gezogen werden kann.

Zum Einbringen von immer ausreichend hohen Zugkräften ist es vorteilhaft, wenn das Schlauchziehmittel eine Klemme aufweist, welche gegenüber dem Schlauchzughaltemittel angetrieben ist, bevorzugt über eine Kopplung mit dem Übergabemittel.

Speziell, wenn die Klemme an dem Übergabemittel befestigt ist, kann die Klemme mittels des Übergabemittels translatorisch gegenüber dem Halter bewegt werden.

Darüber hinaus ist es vorteilhaft, wenn das Schlauchziehmittel dazu eingerichtet ist, in Zusammenwirken mit dem Schlauchzughaltemittel eine Dehnung von 1% bis 10% auf den Übergang von Schlauchstück zu Restschlauch zwischen dem Schlauchziehmittel und dem Schlauchzughaltemittel aufzuprägen, insbesondere von 2% bis 6%, vor allem von etwa 4%.

Speziell bei einer derart ausgewählten Dehnung in dem designierten Trennbereich des zulaufenden Schlauchs kann die Entstehung von Schlauchmaterialrestpartikeln beim Trennen des abzutrennenden Schlauchstücks von dem Restschlauch des zulaufenden Schlauchs besonders effektiv vermieden werden.

Insofern ist auch eine entsprechende Verfahrensführung vorteilhaft, bei welcher das Längsziehen des Schlauchs mit einer Längsdehnung zwischen 1% und 10% durchgeführt wird, bevorzugt von 2% bis 6%, besonders bevorzugt von etwa 4%.

Zum Abtrennen des Schlauchstücks von dem zulaufenden Schlauch können unterschiedliche Mittel eingesetzt werden, beispielsweise eine Drahtschlaufe oder dergleichen.

Eine im Sinne der Erfindung auch ohne die übrigen Merkmale der Erfindung besonders saubere Abtrennung des Schlauchstücks von dem zulaufenden Schlauch kann gewährleistet werden, wenn die Schlauchübergabestation ein Messer aufweist, welches angetrieben ist, und zwar von einer Bereitschaftsposition durch den zulaufenden Schlauch hindurch.

Durch ein derart angetriebenes Messer kann der Schlauch konstruktiv einfach durchgeschnitten werden.

Somit wird die Aufgabe der Erfindung auch von einer Anlage zum Herstellen eines Beutels für medizinische Zwecke umfassend eine Schlauchübergabestation mit einem Übergabemittel zum Übergeben eines der Schlauchübergabestation zulaufenden Schlauchs auf einen Halter und zum dortigen Abtrennen eines an den Halter übergebenen Schlauchstücks von einem Restschlauch des zulaufenden Schlauchs gelöst, um das Schlauchstück anschließend mit zwei Folienlagen zum Bilden eines Zugangs an dem Beutel verbindbar machen zu können, wobei die Schlauchübergabestation ein Messer aufweist, welches von einer Bereitschaftsposition durch den zulaufenden Schlauch hindurch angetrieben ist, wobei das Messer nach dem Trennen sich von dem Restschlauch freizustellen angetrieben ist, und zwar längs in Schlauchrichtung oder mit einer Bewegungskomponente längs in Schlauchrichtung.

Dadurch, dass das Messer nach dem Trennen gegenüber dem zulaufenden Schlauch, freigestellt werden kann, kann die Gefahr verringert werden, dass Schlauchmaterialrestpartikel erst durch eine zusätzliche Berührung des Messers mit dem Schlauch erzeugt werden.

Vorteilhafterweise wird das Messer hierbei zumindest von dem abgetrennten Schlauchstück freigestellt, bevorzugt jedoch sowohl von diesem Schlauchstück als auch von dem Restschlauch des zulaufenden Schlauchs.

Das Messer kann aus einem Zuführbereich des zulaufenden Schlauchs sehr schnell wieder entfernt werden, wenn das Messer einen Kippantrieb aufweist. Somit kann dem Halter den zulaufenden Schlauch wieder schnellstmöglich zugestellt werden.

Auch deshalb ist es vorteilhaft, wenn das Messer zum Freistellen gekippt wird.

Speziell ein Wiedereinbringen des zulaufenden Schlauchs in den Trennbereich für einen nächsten Abtrennvorgang kann schneller erfolgen, wenn der Kippantrieb das Messer von dem Übergabemittel wegkippend eingerichtet ist.

Ist das Messer sich schräg durch den Schlauch bewegend angetrieben, kann die Trennung des zulaufenden Schlauchs aufgrund einer vorteilhaften Schnittführung nochmals verbessert werden.

Der zulaufende Schlauch kann nochmals günstiger durchtrennt werden, wenn das Messer eine Dicke von maximal 1 mm aufweist, vor allem von maximal 0,8 mm, bevorzugt von maximal 0,5 mm, besonders bevorzugt von unter 0,2 mm.

Es wurde gefunden, dass die Gefahr einer Kontaminierung des zulaufenden Schlauchs durch Schlauchmaterialrestpartikel weiter reduziert werden kann, je dünner das Messer hinsichtlich seiner Dicke ausgestaltet ist.

Hierbei können bereits sehr gut verbesserte Schnittergebnisse erzielt werden, wenn das Messer eine Dicke von maximal 1 mm aufweist, zumal das Messer bei dieser Dicke sehr langlebig ausgelegt ist.

Insbesondere die Schlauchübergabestation kann konstruktiv noch einfacher ausgelegt werden, wenn übergabemittelseits das Schlauchziehmittel und das Messer angeordnet sind, wohingegen halterseits das Schlauchzughaltemittel angeordnet ist.

Hinsichtlich des Verfahrens ist es vorteilhaft, wenn der Halter und das Übergabemittel voneinander entfernt werden, insbesondere wenn das Übergabemittel zurückgezogen wird, und dabei der zulaufende Schlauch an der designierten Stelle zum Trennen in die Länge gezogen wird.

Verfahrenstechnisch ist es weiter vorteilhaft, wenn das Abtrennen mittels eines Messers erfolgt, welches während der auf die designierte Stelle zum Abtrennen wirkenden Zugkraft durch den zulaufenden Schlauch zugeführt wird, so dass der zulaufende Schlauch zumindest einerseits, bevorzugt beidseits, der abgetrennten Stelle der Zugkraft nachfolgt und sich nach dem Abtrennen eine Kluft ergibt, die breiter ist als eine Dicke des Messers.

Die Entstehung von unerwünschten Schlauchmaterialrestpartikeln kann signifikant reduziert werden, wenn das Messer zum Abtrennen auf eine Temperatur zwischen 40 °C und 70 °C geheizt wird, vor allem zwischen 40 °C und 60 °C, insbesondere um 50 °C.

Durch die hier beschriebene Anlage bzw. das hier beschriebene Verfahren kann vorliegend insbesondere auch auf zusätzliche Hilfsmittel zum Durchtrennen des zulaufenden Schlauchs verzichtet werden, so dass zweckmäßigerweise das Abtrennen unter Meidung von alkoholischem Gleitmittel erfolgen kann.

Somit kann eine zusätzliche Kontaminierung des Zugangs des medizinischen Beutels reduziert werden.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Zusätzlich sind auch weitere Merkmale, Effekte und Vorteile vorliegender Erfindung anhand anliegender Zeichnung und an nachfolgender Beschreibung erläutert, in welchen beispielhaft eine Schlauchübergabestation an einer Anlage zum Herstellen eines medizinischen Beutels dargestellt und beschrieben ist.

In der Zeichnung zeigen:
- Figur 1: schematisch eine Anlage zum Herstellen eines Beutels für medizinische Zwecke in einem Bereich, in welchem eine Schlauchübergabestation angeordnet ist, welche halterseits ein Schlauchzughaltemittel und andererseits ein Schlauchziehmittel aufweist, um Zugkräfte in einen zulaufenden Schlauch in Schlauchlängsrichtung einbringen zu können;
- Figur 2: schematisch ein Verfahrensschritt an der der in der Figur 1 gezeigten Schlauch-aufsteckstation, bei welchem ein auf eine Mandrene aufgesteckter Schlauch von radial außen geklemmt und anschließend axial vorgespannt wird;
- Figur 3: schematisch ein weiterer Verfahrensschritt an der in der Figur 1 gezeigten Schlauchaufsteckstation, bei welchem der von radial außen geklemmte und axial vorgespannte Schlauch geschnitten wird;
- Figur 4: schematisch ein nächster Verfahrensschritt an der in der Figur 1 gezeigten Schlauchübergabestation, bei welchem die Schlauchziehmittel und das Messer axial zurückgefahren werden;
- Figur 5: schematisch ein nachfolgender Verfahrensschritt an der in der Figur 1 gezeigten Schlauchübergabestation, bei welchem das Messer nach radial unten weggeklappt wird;
- Figur 6: schematisch ein darauffolgender Verfahrensschritt an der in der Figur 1 gezeigten Schlauchübergabestation, bei welchem das Messer translatorisch nach radial unten verfahren wird; und
- Figur 7: schematisch ein weiterer Verfahrensschritt an der in Figur 1 gezeigten Schlauch-übergabestation, bei welchem das Messer in Vorbereitung eines nächsten Schnitts wieder entlang der Kreisbahn nach oben in eine Bereitschaftsposition geklappt wird.

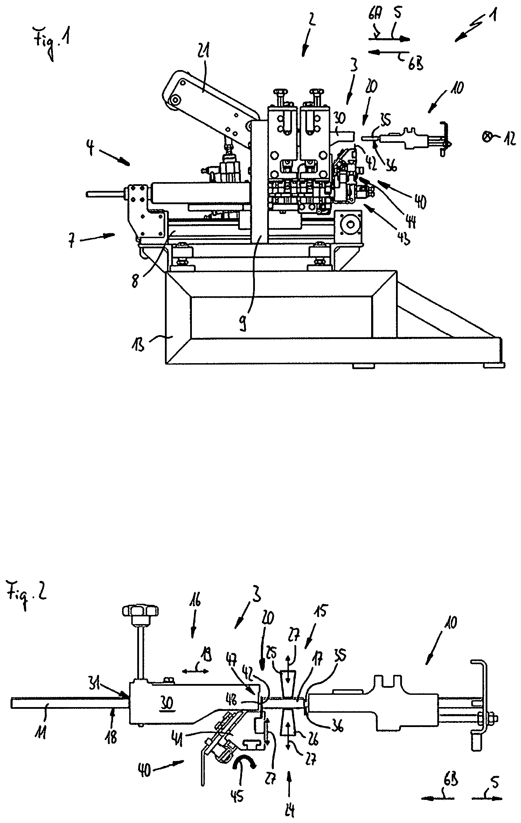

Die in der Figur 1 zumindest teilweise gezeigte Anlage 1 zum Herstellen eines Beutels (nicht gezeigt) für medizinische Zwecke umfasst unter anderem eine Schlauchübergabestation 2, welche gemäß der Darstellung nach der Figur 1 schematisch in einer Seitenansicht gezeigt ist.

Diese Schlauchübergabestation 2 verfügt über ein Übergabemittel 3, welches mittels einer Verfahrmechanik 4 translatorisch in Einbringrichtung 5 bzw. Schlauchzustellrichtung 6A oder entgegen der Einbringrichtung 5 in Schlauchrückstellrichtung 6B verlagert werden kann.

Diese Verfahrmechanik 4 weist zumindest eine Linearverfahreinrichtung 7 mit einer Lineartraverse 8 und einen Schlittenteil 9 auf, an welchem letztendlich die Übergabemittel 3 aufgehangen sind.

In Einbringrichtung 5 bzw. Schlauchzustellrichtung 6A gesehen vor diesen Übergabemitteln 3 befindet sich ein Halter 10, an welchem ein zulaufender Schlauch 11 (siehe Figur 2) übergeben werden soll.

Der Halter 10 läuft hierbei bedarfsweise in Bewegungsumlaufrichtung 12 vor der Schlauchübergabestation 2 bzw. vor den Übergabemitteln 3 ein und wird hierbei derart gestoppt, dass der zulaufende Schlauch 11 von der Schlauchübergabestation 2 im Sinne der Erfindung an den Halter 10 übergeben werden kann.

Der Halter 10 ist hierzu an einem umlaufenden Förderband (nicht gezeigt) einer Fördereinrichtung (nicht gezeigt) der Anlage 1 geführt, wobei auf die diesbezügliche Fördereinrichtung nicht weiter eingegangen wird, da diese aus dem Stand der Technik hinlänglich bekannt ist.

Die gesamte Anlage 1 ist mit einem Gestell 13 fest mit einem Boden (nicht gesondert beziffert) verbunden.

Wie speziell gemäß der Darstellung nach der Figur 2 gut ersichtlich ist, zeichnet sich die vorliegende Schlauchübergabestation 2 jedenfalls halterseits durch ein Schlauchzughaltemittel 15 und andererseits durch ein Schlauchziehmittel 16 aus, welche dazu eingerichtet sind, zwischen einem abgetrennten Schlauchstück 17 und einem Restschlauch 18 des zulaufenden Schlauchs 11 Zugkräfte 19 einzubringen.

Insbesondere werden diese Zugkräfte 19 im Bereich einer Schnittstelle und während des Abtrennens des Restschlauchs 18 von dem abzutrennenden Schlauchstück 17 eingebracht, um hierdurch an einer Trenn- bzw. Schnittstelle 20 einen verbesserten Schnitt bzw. eine verbesserte Schnittführung zu erzielen, wodurch weniger bzw. signifikant weniger Schlauchmaterialrestpartikel (hier nicht gezeigt) erzeugt werden, welche insbesondere den späteren Zugang und damit auch den Inhalt des medizinischen Beutels kontaminieren können.

Zum Aufbringen der Zugkräfte 19 weist das Schlauchziehmittel 16 einen Rückziehantrieb 21 auf, welcher dem Übergabemittel 3 zugeordnet ist, sodass dieser Rückziehantrieb 21 gemeinsam mit dem Übergabemittel 3 mittels der Linearverfahreinrichtung 7 bewegt werden kann.

Insbesondere mittels des Schlauchziehmittels 16 in Zusammenwirken mit dem Schlauchzughaltemittel 15 kann eine Dehnung des zulaufenden Schlauchs 11 speziell im Bereich der Schnittstelle 20 von 1 % bis 10 % erzielt werden.

Besonders vorteilhaft ist eine Dehnung von etwa 4 %, da sich herausgestellt hat, dass hierbei der Schnitt derart erfolgen kann, dass kaum mehr Schlauchmaterialrestpartikel beim Schneiden erzeugt werden.

Die dem Halter 10 zugeordneten Schlauchzughaltemittel 15 umfassen zumindest in diesem Ausführungsbeispiel eine Klemmeinrichtung (nicht gesondert beziffert) in Gestalt einer von radial außen angreifenden Schlauchklemme 24, welche insbesondere zwei Klemmelemente 25 und 26 aufweist, die dem abzutrennenden Schlauchstück 17 von radial außen zugestellt werden können, wobei die beiden Klemmelemente 25 und 26 bezogen auf die Einbringrichtung 5 quer, das heißt in radialer Richtung 27, beweglich gelagert sind.

Das Schlauchziehmittel 16 hingegen ist zumindest in diesem Ausführungsbeispiel durch hier nicht weiter gezeigte Fixierelemente und/oder durch den Rückziehantrieb 21 ergänzt, welche dem Übergabemittel 3 zugeordneten sind.

Insofern kann einerseits das an dem Halter 10 gehalterte abzutrennende Schlauchstück 17 an dem Halter 10 und andererseits der Restschlauch 18 des zulaufenden Schlauchs 11 an dem Übergabemittel 3 fixiert bzw. gehaltert werden, wobei durch derart ausgestaltete Übergabemittel 3 die vorliegenden Schlauchziehmittel 16 konstruktiv besonders einfach realisiert sind.

Der zulaufende Schlauch 11 ist vorliegend besonders präzise an dem Übergabemittel 3 seitlich geführt, da das Übergabemittel 3 einen Grundkörper 30 aufweist, welcher zumindest einen Durchführkanal 31 für den zulaufenden Schlauch 11 aufweist, durch welchen hindurch der zulaufende Schlauch 11 in Zustellrichtung 5 geführt und somit auch relativ gegenüber dem Grundkörper 30 bewegt werden kann.

Damit dann halterseits der zulaufende Schlauch 11 bzw. das abzutrennende Schlauchstück 17 betriebssicher fixiert werden kann, besitzt der Halter 10 speziell in diesem Ausführungsbeispiel einen Dorn 35, welcher hier sogleich als dornförmige Zentralelektrode 36 ausgestaltet ist.

Vorteilhafterweise weist der Dorn 35 bzw. die dornförmige Zentralelektrode 36 einen Außendurchmesser (nicht gesondert beziffert) auf, welcher mit dem Innendurchmesser (ebenfalls nicht explizit beziffert) des zulaufenden Schlauchs 11 derart komplementär ist, dass der in Schlauchzustellrichtung 6A geförderte zulaufende Schlauch 11 betriebssicher auf den Dorn 35 bzw. auf die dornförmige Zentralelektrode 36 aufgesteckt werden kann.

Insbesondere aufgrund dieser speziellen Ausführungsform kann vorliegend hinsichtlich der Schlauchübergabestation 2 auch von einer Schlauchaufsteckstation (nicht zusätzlich beziffert) gesprochen werden.

Genauso verhält es sich hinsichtlich des Übergabemittels 3, wobei vorliegend dieses ein Aufsteckmittel (nicht zusätzlich beziffert) zum Aufstecken des zulaufenden Schlauchs 11 auf den Halter 10 ist.

Der Schlauchübergabestation 2 ist ferner eine Trenn- bzw. Schneideinrichtung 40 zugeordnet, welche gemeinsam mit dem Übergabemittel 3 an der Linearverfahreinrichtung 7 angeordnet ist.

Die Trenn- bzw. Schneideinrichtung 40 weist in diesem Ausführungsbeispiel einen Schneidkopf 41 auf, der ein Messer 42 zum Schneiden des zulaufenden Schlauchs 11 trägt.

Die Trenn- bzw. Schneideinrichtung 40 zeichnet sich des Weiteren dadurch aus, dass sie einerseits einen Hebe-Senkantrieb 43 und andererseits zusätzlich einen Kippantrieb 44 aufweist.

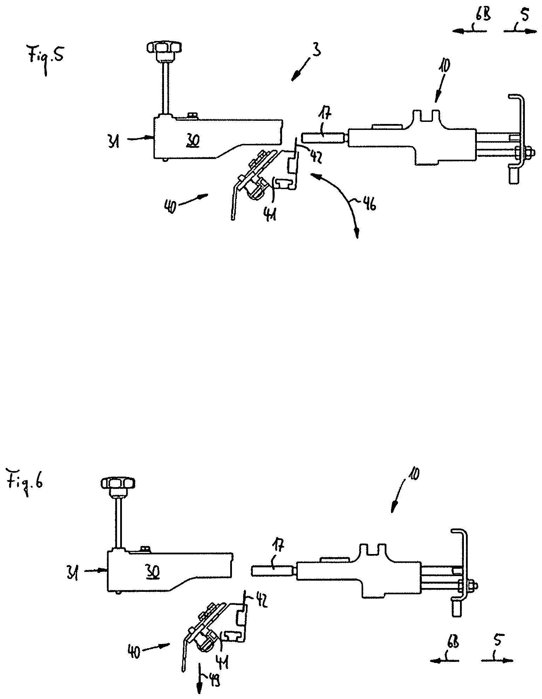

Somit kann das Messer 42 gegenüber der Einbringrichtung 5 des zulaufenden Schlauchs 11 nicht nur in radialer Richtung 27 translatorisch bewegt werden, sondern das Messer kann mittels des Kippantriebs 44 gemäß Pfeil 45 entlang einer Kreisbahn 46 (siehe insbesondere Figur 5) geführt werden, um hierdurch nach unten von der Schnittstelle 20 entfernt zu werden.

Das Messer 42 hat in diesem Ausführungsbeispiel beispielhaft eine Dicke von lediglich 0,2 mm, was sich wiederum sehr günstig auf die Vermeidung von Schlauchmaterialrestpartikeln beim Trennen des zulaufenden Schlauchs 11 auswirkt.

Gemäß der Darstellung nach der Figur 2 ist die Schlauchübergabestation 2 in einem Verfahrenszustand gezeigt, bei welchem der zulaufende Schlauch 11 dem Halter 10 bereits zugeführt ist, wobei das abzutrennende Schlauchstück 17 bzw. das bereits abgetrennte Schlauchstück 17 auf den Dorn 35 des Halters 10 aufgesteckt ist.

Auch ist der zulaufende Schlauch 11 bzw. das bereits abgetrennte Schlauchstück 17 durch das Schlauchzughaltemittel 15 in Gestalt der von radial außen angreifenden Schlauchklemme 24 gehalten, wobei der zulaufende Schlauch 11 mittels der Schlauchziehmittel 16 längs gezogen und das abzutrennende Schlauchstück 17 bereits von dem Restschlauch 18 des zulaufenden Schlauchs 11 abgetrennt ist.

Das Messer 42 wurde, während auf die designierte Schnittstelle 20 die Zugkräfte 19 bereits wirken, durch den Schlauch 11 geführt, sodass der zulaufende Schlauch 11 zumindest einerseits, bevorzugt aber beiderseits, an der abgetrennten Stelle 20 den Zugkräften 19 nachfolgt und sich nach dem Abtrennen eine Kluft 48 ergibt, welche in jedem Fall breiter ist als die Dicke des Messers 42.

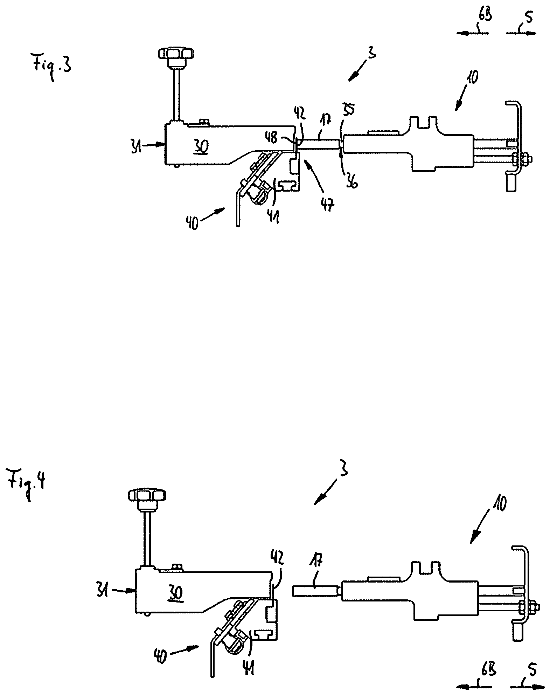

Während gemäß der Darstellung nach Figur 2 die Schlauchübergabestation 2 noch mit aktivierter Schlauchklemme 24 und einem gerade durchtrennten zulaufenden Schlauch 11 dargestellt ist, ist gemäß der Darstellung nach Figur 3 bereits ein nächster Verfahrensschritt der Schlauchübergabestation 2 gezeigt, bei welchem die Klemmelemente 25 und 26 der von radial außen angreifenden Schlauchklemme 24 wieder nach radial außen und zurückverlagert sind. Das Messer 42 befindet sich hierbei jedoch noch in Schneidposition 47.

Gemäß der Darstellung nach der Figur 4 ist das Messer 42 nach dem Durchtrennen des zulaufenden Schlauchs 11 sowohl von dem abgetrennten Schlauchstück 17 als auch von dem Restschlauch 18 freigestellt, sowohl einerseits mittels einer translatorischen Bewegung in Schlauchrückstellrichtung 6B der Übergabemittel 3 und andererseits mittels einer Kippbewegung des Messers entlang der Kreisbahn 46 gemäß der Darstellung nach der Figur 5.

Gemäß der Darstellung nach der Figur 6 ist die Schlauchübergabestation 2 in einem nächsten Verfahrensschritt gezeigt, bei welchem das Messer 42 bzw. der gesamte Schneidkopf 41 mittels des Hebe- bzw. Senkantriebs 43 zusätzlich in Abwärtsrichtung 49 nach unten abgesenkt ist, sodass das Messer 42 vollständig aus dem Bereich der Schnittstelle 20 herausbewegt ist.

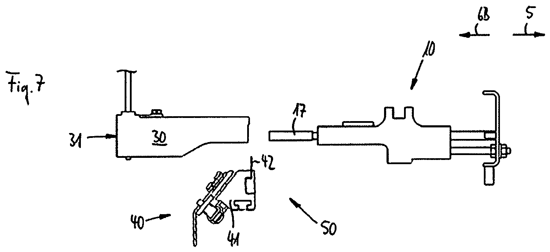

Letztlich wird gemäß der Darstellung nach der Figur 7 das Messer 42 wieder in eine Bereitschaftsposition 50 hineingekippt, sodass der zulaufende Schlauch 11 einem weiteren Halter 10 gemäß der Schlauchzustellrichtung 6A zugeführt werden kann.

Es versteht sich, dass nach dem Freistellen des Messers 42 von dem abgetrennten Schlauchstück 17 der Halter 10 einer weiteren Bearbeitungsstation (hier nicht gezeigt) der Anlage 1 zugestellt werden kann, und dass das noch an dem Halter 10 gehaltene abgetrennte Schlauchstück 17 zur Weiterverarbeitung an dieser weiteren Bearbeitungsstation bereitgestellt ist.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der erfindungsgemäßen Anlage bzw. Schlauchübergabestation und des erfindungsgemäßen Verfahrens handelt, insofern beschränkt sich die Ausgestaltung der Erfindung nicht auf dieses Ausführungsbeispiel.

Sämtliche in den Anmeldeunterlagen offenbarten Merkmale werden als erfindungswesentlich beansprucht, sofern sie einzeln oder in Kombination gegenüber dem Stand der Technik neu sind.

### Bezugszeichenliste

- 1: Anlage
- 2: Schlauchübergabestation
- 3: Übergabemittel
- 4: Verfahrmechanik
- 5: Einbringrichtung
- 6A: Schlauchzustellrichtung
- 6B: Schlauchrückstellrichtung
- 7: Linearverfahreinrichtung
- 8: Lineartraverse
- 9: Schlittenteil
- 10: Halter
- 11: zulaufender Schlauch
- 12: Bewegungsumlaufrichtung
- 13: Gestell
- 15: Schlauchzughaltemittel
- 16: Schlauchziehmittel
- 17: übergebenes, abgetrenntes bzw. abzutrennendes Schlauchstück
- 18: Restschlauch
- 19: Zugkräfte
- 20: Schnittstelle bzw. designierte Stelle
- 21: Rückziehantrieb
- 24: von radial außen angreifende Schlauchklemme
- 25: erstes Klemmelement
- 26: zweites Klemmelement
- 27: radiale Richtung
- 30: Grundkörper
- 31: Durchführkanal
- 35: Dorn
- 36: dornförmige Zentralelektrode
- 40: Trenn- bzw. Schneideinrichtung
- 41: Schneidkopf
- 42: Messer
- 43: Hebe-Senkantrieb
- 44: Kippantrieb
- 45: Pfeil
- 46: Kreisbahn
- 47: Schneidposition
- 48: Kluft
- 49: Abwärtsrichtung
- 50: Bereitschaftsposition

## Patentansprüche

1. Anlage (1) zum Herstellen eines Beutels für medizinische Zwecke umfassend eine Schlauchübergabestation (2) mit einem Übergabemittel (3) zum Übergeben eines der Schlauchübergabestation (2) zulaufenden Schlauchs (11) an einen Halter (10) und zum dortigen Abtrennen eines an den Halter (10) übergebenen Schlauchstücks (17) von einem Restschlauch (18) des zulaufenden Schlauchs (11), um das abgetrennte Schlauchstück (17) anschließend mit zwei Folienlagen zum Bilden eines Zugangs an dem Beutel verbindbar machen zu können,
***dadurch gekennzeichnet, dass***
die Schlauchübergabestation (2) halterseits ein Schlauchzughaltemittel (15) und andererseits ein Schlauchziehmittel (16) aufweist, welche dazu eingerichtet sind, zwischen dem abzutrennenden Schlauchstück (17) und dem Restschlauch (18) des zulaufenden Schlauchs (11) Zugkräfte (19) einzubringen, während das Abtrennen erfolgt.

2. Anlage (1) nach Anspruch 1, **dadurch gekennzeichnet, dass** der Halter (10) einen Dorn (35) aufweist, insbesondere eine dornförmige Zentralelektrode (36).

3. Anlage (1) nach Anspruch 1 oder 2, **dadurch gekennzeichnet, dass** der Halter (10) eine von außen angreifende Schlauchklemme (24) aufweist.

4. Anlage (1) nach einem der vorstehenden Ansprüche, **dadurch gekennzeichnet, dass** der Halter (10) in Einbringrichtung (5) des zulaufenden Schlauchs (11) fixiert ist.

5. Anlage (1) nach einem der vorstehenden Ansprüche, **dadurch gekennzeichnet, dass** das Übergabemittel (3) einen Durchführkanal (31) für den zulaufenden Schlauch (11) aufweist.

6. Anlage (1) nach einem der vorstehenden Ansprüche, **dadurch gekennzeichnet, dass** das Übergabemittel (3) in Einbringrichtung (5) vor- und rückfahrbar ist.

7. Anlage (1) nach Anspruch 6, **dadurch gekennzeichnet, dass** das Übergabemittel (3) dazu eingerichtet ist, den Durchführkanal (31) nah an den Halter (10) zu verfahren, dann den zulaufenden Schlauch (11) zumindest mit dem abzutrennenden Schlauchstück (17) zu übergeben, und nach Abtrennen des Schlauchstücks (17) den Restschlauch (18) des zulaufenden Schlauchs (11) wieder durch den Durchführkanal hindurch von dem Halter (10) zu entfernen.

8. Anlage (1) nach einem der vorstehenden Ansprüche, **dadurch gekennzeichnet, dass** das Schlauchziehmittel (16) einen Rückziehantrieb (21) aufweist.

9. Anlage (1) nach Anspruch 8, **dadurch gekennzeichnet, dass** das Schlauchziehmittel (16) eine Klemme aufweist, welche gegenüber dem Schlauchzughaltemittel (15) angetrieben ist, bevorzugt über eine Kopplung mit dem Übergabemittel (3).

10. Anlage (1) nach einem der vorstehendem Ansprüche, **dadurch gekennzeichnet, dass** das Schlauchziehmittel (16) dazu eingerichtet ist, in Zusammenwirken mit dem Schlauchzughaltemittel (15) eine Dehnung von 1 % bis 10 % auf den Übergang von abzutrennendem Schlauchstück (17) zu Restschlauch (18) zwischen dem Schlauchziehmittel (16) und dem Schlauchzughaltemittel (15) aufzuprägen, insbesondere von 2 % bis 6 %, vor allem von etwa 4 %.

11. Anlage (1) nach einem der vorstehenden Ansprüche, **dadurch gekennzeichnet, dass** die Schlauchübergabestation (2) ein Messer (42) aufweist, welches angetrieben ist, und zwar von einer Bereitschaftsposition (50) durch den zulaufenden Schlauch (11) hindurch.

12. Anlage (1) nach Anspruch 11, **dadurch gekennzeichnet, dass** das Messer (42) einen Kippantrieb (44) aufweist.

13. Anlage (1),
***insbesondere*** nach einem der vorstehenden Ansprüche,
zum Herstellen eines Beutels für medizinische Zwecke umfassend eine Schlauchübergabestation (2) mit einem Übergabemittel (3) zum Übergeben eines der Schlauchübergabestation (2) zulaufenden Schlauchs (11) an einen Halter (10) und zum dortigen Abtrennen eines an den Halter (10) übergebenen Schlauchstücks (17) von einem Restschlauch (18) des zulaufenden Schlauchs (11), um das abgetrennte Schlauchstück (17) anschließend mit zwei Folienlagen zum Bilden eines Zugangs an dem Beutel verbindbar machen zu können,
wobei
die Schlauchübergabestation (2) ein Messer (42) aufweist, welches von einer Bereitschaftsposition (50) durch den zulaufenden Schlauch (11) hindurch angetrieben ist,
***dadurch gekennzeichnet, dass***
das Messer (42) nach dem Trennen sich von dem Restschlauch (18) freizustellen angetrieben ist, und zwar längs in Schlauchrichtung oder mit einer Bewegungskomponente (53) längs in Schlauchrichtung.

14. Anlage (1) nach Anspruch 13, **dadurch gekennzeichnet, dass** das Messer (42) einen Kippantrieb (44) aufweist.

15. Anlage (1) nach Anspruch 12 oder 14, **dadurch gekennzeichnet, dass** der Kippantrieb (44) das Messer (42) von dem Übergabemittel (3) wegkippend eingerichtet ist.

16. Anlage (1) nach einem der Ansprüche 11 bis 15, **dadurch gekennzeichnet, dass** das Messer (42) sich schräg durch den zulaufenden Schlauch (11) bewegend angetrieben ist.

17. Anlage (1) nach einem der Ansprüche 11 bis 16, **dadurch gekennzeichnet, dass** das Messer (42) eine Dicke von maximal 1 mm aufweist, vor allem von maximal 0,8 mm, bevorzugt von maximal 0,5 mm, besonders bevorzugt von unter 0,2 mm.

18. Anlage (1) nach einem der Ansprüche 11 bis 17, **dadurch gekennzeichnet, dass** übergabemittelseits das Schlauchziehmittel (16) und das Messer (42) angeordnet sind, wohingegen halterseits das Schlauchzughaltemittel (15) angeordnet ist.

19. Verfahren zum Herstellen eines Beutels für medizinische Zwecke, bei welchem ein einer Schlauchübergabestation (2) zulaufender Schlauch (11) mittels eines Übergabemittels an einen Halter (10) zum dortigen Abtrennen eines an den Halter (10) übergebenen Schlauchstücks (17) von einem Restschlauch des zulaufenden Schlauchs (11) übergeben wird, so dass das abgetrennte Schlauchstück (17) anschließend mit zwei Folienlagen zum Bilden eines Zugangs an dem Beutel verbunden wird, ***insbesondere*** unter Verwendung einer Anlage (1) nach einem der vorstehenden Ansprüche,
***wobei***
die folgenden Schritte durchgeführt werden:
a. Zuführen des zulaufenden Schlauchs (11) zum Halter (10);
b. zugfestes Halten des zulaufenden Schlauchs (11) an dem abzutrennenden Schlauchstück (17) auf Seiten des Halters (10) mittels eines Schlauchzughaltemittels (15);
c. Längsziehen des zulaufenden Schlauchs (11) zwischen dem Schlauchzughaltemittel (15) und einer Zuführung, sodass Zugkräfte auf eine designierte Stelle (20) zum Abtrennen wirken; und
d. Abtrennen des abzutrennenden Schlauchstücks (17) von dem Restschlauch des zulaufenden Schlauchs (11).

20. Verfahren nach Anspruch 19, **dadurch gekennzeichnet, dass** das Zuführen des zulaufenden Schlauchs (11) durch einen Durchführkanal (31) erfolgt.

21. Verfahren nach Anspruch 19 oder 20, **dadurch gekennzeichnet, dass** das Zuführen des zulaufenden Schlauchs (11) auf einen Dorn (35) erfolgt, insbesondere auf eine Zentralelektrode (36).

22. Verfahren nach einem der Ansprüche 19 bis 21, **dadurch gekennzeichnet, dass** der zulaufende Schlauch (11) an einem abzutrennenden Schlauchstück (17) mit dem Halter (10) gegen Zurückziehen fixiert wird, vor allem von außen festgeklemmt wird.

23. Verfahren nach einem der Ansprüche 19 bis 22, **dadurch gekennzeichnet, dass** der Halter (10) und das Übergabemittel (3) voneinander entfernt werden, insbesondere das Übergabemittel (3) zurückgezogen wird, und dabei der zulaufende Schlauch (11) an der designierten Stelle (20) zum Abtrennen in die Länge gezogen wird.

24. Verfahren nach Anspruch 23, **dadurch gekennzeichnet, dass** das Abtrennen mittels eines Messers (42) erfolgt, welches während der auf die designierte Stelle (20) zum Abtrennen wirkenden Zugkraft durch den zulaufenden Schlauch (11) geführt wird, sodass der zulaufende Schlauch (11) zumindest einerseits, bevorzugt beiderseits, der abgetrennten Stelle der Zugkraft nachfolgt und sich nach dem Abtrennen eine Kluft (48) ergibt, die breiter ist als eine Dicke des Messers (42).

25. Verfahren nach Anspruch 24, **dadurch gekennzeichnet, dass** das Messer (42) nach dem Abtrennen von dem zulaufenden Schlauch (11) freigestellt wird, und zwar mittels einer Bewegung, die eine Komponente längs einer Zugkraftrichtung aufweist.

26. Verfahren nach Anspruch 24 oder 25, **dadurch gekennzeichnet, dass** das Messer (42) zum Freistellen gekippt wird.

27. Verfahren nach einem der Ansprüche 24 bis 26, **dadurch gekennzeichnet, dass** das Messer (42) zum Abtrennen auf eine Temperatur zwischen 40 °C und 70 °C geheizt wird, vor allem zwischen 40 °C und 60 °C, insbesondere um 50 °C.

28. Verfahren nach einem der Ansprüche 19 bis 27, **dadurch gekennzeichnet, dass** das Längsziehen des zulaufenden Schlauchs (11) mit einer Längsdehnung zwischen 1 % und 10 % durchgeführt wird, bevorzugt von 2 % bis 6 %, besonders bevorzugt etwa 4 %.

29. Verfahren nach einem der Ansprüche 19 bis 28, **dadurch gekennzeichnet, dass** das Abtrennen unter Meidung von alkoholischem Gleitmittel erfolgt.

## Claims

1. Plant (1) for producing a bag for medical purposes, comprising a tube transfer station (2) with a transfer means (3) for transferring a tube (11) arriving at the tube transfer station (2) to a holder (10) and for cutting off there a tubing piece (17) transferred to the holder (10) from a residual tubing (18) of the feeding tube (11) so as to subsequently make the cut tubing piece (17) connectable with two foil sheets for forming an access at the bag,
***characterized in that***
the tube transfer station (2) has, on the holder side, a tube tension holding means (15) and on the other side, a tube drawing means (16) which are adapted to apply tensile forces (19) between the tubing piece (17) to be cut off and the residual tubing (18) of the arriving tube (11) while cutting takes place.

2. Plant (1) according to Claim 1, **characterized in that** the holder (10) has a mandrel (35), in particular a mandrel-shaped central electrode (36).

3. Plant (1) according to Claim 1 or 2, **characterized in that** the holder (10) has a tube clip (24) attached from the outside.

4. Plant (1) according to one of the above Claims, **characterized in that** the holder (10) is fixed into place in the feeding direction (5) of the arriving tube (11).

5. Plant (1) according to one of the above Claims, **characterized in that** the transfer means (3) has a passage channel (31) for the arriving tube (11).

6. Plant (1) according to one of the above Claims, **characterized in that** the transfer means (3) can be moved back and forth in the feeding direction (5) .

7. Plant (1) according to Claim 6, **characterized in that** the transfer means (3) is adapted to move the passage channel (31) close to the holder (10), to then transfer the arriving tube (11) at least with the tubing piece (17) to be cut off and to then retract the residual tubing (18) of the arriving tube (11) from the holder (10) through the passage channel after the tubing piece (17) has been cut off.

8. Plant (1) according to one of the above Claims, **characterized in that** the tube drawing means (16) has a retraction drive (21).

9. Plant (1) according to Claim 8, **characterized in that** the tube drawing means (16) has a clamp which is driven with respect to the tube tension holding means (15), preferably via a coupling with the transfer means (3).

10. Plant (1) according to one of the above Claims, **characterized in that** the tube drawing means (16) is adapted to apply, in cooperation with the tube tension holding means (15), an elongation of 1% to 10% to the transition part from the tubing piece (17) to be cut off to the residual tubing (18) between the tube drawing means (16) and the tube tension holding means (15), in particular of 2% to 6%, especially of approximately 4%.

11. Plant (1) according to one of the above Claims, **characterized in that** the tube transfer station (2) has a knife (42) which is driven, namely from a standby position (50) through the arriving tube (11).

12. Plant (1) according to Claim 11, **characterized in that** the knife (42) has a tilting drive (44).

13. Plant (1),
***in particular*** according to one of the above Claims,
for producing a bag for medical purposes, comprising a tube transfer station (2) with a transfer means (3) for transferring a tube (11) arriving at the tube transfer station (2) to a holder (10) and for cutting off there a tubing piece (17) from a residual tubing (18) of the arriving tube (11) so as to subsequently make the cut tubing piece (17) connectable with two foil sheets for forming an access at the bag,
the tube transfer station (2) having a knife (42) which is driven from a standby position (50) through the feeding tube (11),
***characterized in that***
the knife (42) is driven to release itself from the residual tube (18) after cutting, namely longitudinally in the direction of the tube or with a motion component (53) longitudinally in the direction of the tube.

14. Plant (1) according to Claim 13, **characterized in that** the knife (42) has a tilting drive (44).

15. Plant (1) according to Claim 12 or 14, **characterized in that** the tilting drive (44) is adapted to tilt the knife (42) away from the transfer means (3) .

16. Plant (1) according to one of Claims 11 through 15, **characterized in that** the knife (42) is driven to move at a slant angle through the arriving tube (11).

17. Plant (1) according to one of Claims 11 through 16, **characterized in that** the knife (42) has a thickness of maximally 1 mm, in particular maximally 0.8 mm, preferably maximally 0.5 mm, especially preferably less than 0.2mm.

18. Plant (1) according to one of Claims 11 through 17, **characterized in that** the tube drawing means (16) and the knife (42) are arranged on the transfer means side, whereas the tube tension holding means (15) is arranged on the holder side.

19. Method of manufacturing a bag for medical purposes, in which a tube (11) arriving at a tube transfer station (2) is transferred by a transfer means to a holder (10) for cutting off there a tubing piece (17) transferred to the holder (10) from a residual tubing of the arriving tube (11), so that subsequently the separated tubing piece (17) is connected with two foil sheets for forming an access at the bag,
***in particular*** using a plant (1) according to one of the above Claims,
***wherein***
the following steps are performed:
a. feeding the arriving tube (11) to the holder (10);
b. tension-proof holding of the arriving tube (11) at the tubing piece (17) to be cut off on the side of the holder (10) by means of a tube tension holding means (15);
c. longitudinal drawing of the arriving tube (11) between the tube tension holding means (15) and a feeder, so that tensile forces act on a designated point (20) for cutting; and
d. cutting off the tubing piece (17) to be cut off from the residual tubing of the arriving tube (11).

20. Method according to Claim 19, **characterized in that** feeding of the arriving tube (11) takes place through a passage channel (31).

21. Method according to Claim 19 or 20, **characterized in that** the arriving tube (11) is fed onto a mandrel (35), in particular onto a central electrode (36).

22. Method according to one of Claims 19 through 21, **characterized in that** the arriving tube (11) is fixed into place against withdrawal, in particular clamped from the outside, at a tubing piece (17) to be cut off by means of the holder (10).

23. Method according to one of Claims 19 through 22, **characterized in that** the holder (10) and the transfer means (3) are removed from each other, in particular the transfer means (3) is retracted and during this process, the arriving tube (11) is elongated for cutting at the designated point (20) .

24. Method according to Claim 23, **characterized in that** cutting is performed by means of a knife (42) which is guided through the arriving tube (11) while the tensile force acts on the designated point (20) for cutting so that the arriving tube (11) follows the tensile force at least on one side, preferably on both sides, of the cut point and a gap (48) results after cutting which is broader than a thickness of the knife (42).

25. Method according to Claim 24, **characterized in that** the knife (42) is released from the arriving tube (11) after cutting, namely by means of a motion which has a component longitudinally to a direction of the tensile force.

26. Method according to Claim 24 or 25, **characterized in that** the knife (42) is tilted for releasing.

27. Method according to one of Claims 24 through 26, **characterized in that** for cutting, the knife (42) is heated to a temperature between 40°C and 70°C, in particular between 40°C and 60°C, especially about 50°C.

28. Method according to one of Claims 19 through 27, **characterized in that** longitudinal drawing of the arriving tube (11) is performed with an elongation between 1% and 10%, preferably from 2% to 6%, especially preferably about 4%.

29. Method according to one of Claims 19 through 28, **characterized in that** cutting takes place without alcoholic lubricants.

## Revendications

1. Installation (1), destinée à produire un sachet à vocation médicale, comprenant un poste de transfert de boudins (2) pourvu d'un moyen de transfert (3) pour transférer à un support (10) un boudin (11) arrivant vers le poste de transfert de boudins (2) et pour y sectionner un morceau de boudin (17) transféré au support (10) d'un boudin résiduel (18) du boudin (11) arrivant, pour pouvoir donner ensuite au morceau de boudin (17) sectionné la capacité d'être assemblé avec deux couches de film pour créer un accès au sachet,
**caractérisée en ce que**
du côté du support, le poste de transfert de boudins (2) comporte un moyen de tenue en traction du boudin (15) et d'autre part un moyen de traction du boudin (16) lesquels sont aménagés pour introduire des forces de traction (19) entre le morceau de boudin (17) à sectionner et le boudin résiduel (18) du boudin (11) arrivant, pendant le sectionnement.

2. Installation (1) selon la revendication 1, **caractérisée en ce que** le support (10) comporte une épine (35), notamment une électrode centrale (36) en forme d'épine.

3. Installation (1) selon la revendication 1 ou 2, **caractérisée en ce que** le support (10) comporte une pince à boudin (24) attaquant par l'extérieur.

4. Installation (1) selon l'une quelconque des revendications précédentes, **caractérisée en ce que** le support (10) est fixé dans la direction d'introduction (5) du boudin (11) arrivant.

5. Installation (1) selon l'une quelconque des revendications précédentes, **caractérisée en ce que** le moyen de transfert (3) comporte un canal de passage (31) pour le boudin (11) arrivant.

6. Installation (1) selon l'une quelconque des revendications précédentes, **caractérisée en ce que** le moyen de transfert (3) peut être déplacé en aller et retour dans la direction d'introduction (5).

7. Installation (1) selon la revendication 6, **caractérisée en ce que** le moyen de transfert (3) est aménagé pour déplacer le canal de passage (31) à proximité du support (10), pour transférer ensuite le boudin (11) arrivant au moins avec le morceau de boudin (17) à sectionner, et après le sectionnement du morceau de boudin (17), pour retirer de nouveau du support (10) le boudin résiduel (18) du boudin (11) arrivant à travers le canal de passage.

8. Installation (1) selon l'une quelconque des revendications précédentes, **caractérisée en ce que** le moyen de traction du boudin (16) comporte un entraînement en retrait (21).

9. Installation (1) selon la revendication 8, **caractérisée en ce que** le moyen de traction du boudin (16) comporte une pince, qui est entraînée par rapport au moyen de tenue en traction du boudin (15), de préférence via un accouplement avec le moyen de transfert (3).

10. Installation (1) selon l'une quelconque des revendications précédentes, **caractérisée en ce que** le moyen de traction du boudin (16) est aménagé pour appliquer en coopération avec le moyen de tenue en traction du boudin (15) une extension de 1 % à 10 %, notamment de 2 % à 6 %, prioritairement d'environ 4 % sur le passage du morceau de boudin (17) à sectionner vers le boudin résiduel (18), entre le moyen de traction du boudin (16) et le moyen de tenue en traction du boudin (15).

11. Installation (1) selon l'une quelconque des revendications précédentes, **caractérisée en ce que** le poste de transfert de boudins (2) comporte une lame (42), laquelle es entraînée, à savoir à partir d'une position de disponibilité (50) à travers le boudin (11) arrivant.

12. Installation (1) selon la revendication 11, **caractérisée en ce que** la lame (42) comporte un entraînement en basculement (44) .

13. Installation (1), notamment selon l'une quelconque des revendications précédentes, destinée à produire un sachet à vocation médicale, comprenant un poste de transfert de boudins (2) pourvu d'un moyen de transfert (3) pour transférer à un support (10) un boudin (11) arrivant vers le poste de transfert de boudins (2) et pour y sectionner un morceau de boudin (17) transféré au support (10) d'un boudin résiduel (18) du boudin (11) arrivant, pour pouvoir donner ensuite au morceau de boudin (17) sectionné la capacité d'être assemblé avec deux couches de film pour créer un accès au sachet,
le poste de transfert de boudins (2) comportant une lame (42), laquelle est entraînée à partir d'une position de disponibilité (50) à travers le boudin (11) arrivant, **caractérisée en ce qu'**après le sectionnement, la lame (42) est entraînée pour se libérer du boudin résiduel (18), à savoir le long de la direction du boudin ou avec une composante de déplacement (53) le long de la direction du boudin.

14. Installation (1) selon la revendication 13, **caractérisée en ce que** la lame (42) comporte un entraînement en basculement (44) .

15. Installation (1) selon la revendication 12 ou 14, **caractérisée en ce que** l'entraînement en basculement (44) est aménagé pour basculer la lame (42) en éloignement du moyen de transfert (3).

16. Installation (1) selon l'une quelconque des revendications 11 à 15, **caractérisée en ce que** la lame (42) est entraînée en se déplaçant en oblique à travers le boudin (11) arrivant.

17. Installation (1) selon l'une quelconque des revendications 11 à 16, **caractérisée en ce que** la lame (42) présente une épaisseur d'un maximum de 1 mm, prioritairement d'un maximum de 0,8 mm, de préférence d'un maximum de 0,5 mm, de manière particulièrement préférentielle, inférieure à 0,2 mm.

18. Installation (1) selon l'une quelconque des revendications 11 à 17, **caractérisée en ce que** du côté du moyen de transfert sont placés le moyen de traction du boudin (16) et la lame (42), alors que du côté du support est placé le moyen de tenue en traction du boudin (15).

19. Procédé, destiné à produire un sachet à vocation médicale, lors duquel un boudin (11) arrivant vers un poste de transfert de boudins (2) est transféré par un moyen de transfert à un support (10) pour y sectionner un morceau de boudin (17) transféré au support (10) d'un boudin résiduel du boudin (11) arrivant, de telle sorte que le morceau de boudin (17) sectionné soit assemblé ensuite avec deux couches de film, pour créer un accès au sachet,
en utilisant notamment une installation (1) selon l'une quelconque des revendications précédentes,
les étapes suivantes étant réalisées, consistant à :
a. amener le boudin (11) arrivant vers le support (10) ;
b. maintenir de manière résistant à la traction le boudin (11) arrivant sur le morceau de boudin (17) à sectionner, du côté du support (10), à l'aide d'un moyen de tenue en traction du boudin (15) ;
c. étirer en longueur le boudin (11) arrivant entre le moyen de tenue en traction du boudin (15) et une alimentation, de sorte que des forces de traction agissent sur un endroit (20) désigné, pour le sectionnement ; et
d. sectionner le morceau de boudin (17) à sectionner du boudin résiduel du boudin (11) arrivant.

20. Procédé selon la revendication 19, **caractérisé en ce que** l'alimentation du boudin (11) arrivant s'effectue à travers un canal de passage (31).

21. Procédé selon la revendication 19 ou 20, **caractérisé en ce que** l'alimentation du boudin (11) arrivant s'effectue sur une épine (3S), notamment sur une électrode centrale (36).

22. Procédé selon l'une quelconque des revendications 19 à 21, **caractérisé en ce qu'**on fixe contre un retrait le boudin (11) arrivant sur le morceau de boudin (17) à sectionner sur le support (10), prioritairement **en ce qu'**on le serre par l'extérieur.

23. Procédé selon l'une quelconque des revendications 19 à 22, **caractérisé en ce qu'**on éloigne l'un de l'autre le support (10) et le moyen de transfert (3), notamment **en ce qu'**on tire vers l'arrière le moyen de transfert (3) et on tire à cet effet le boudin (11) arrivant sur l'endroit désigné (20), pour le sectionnement en longueur.

24. Procédé selon la revendication 23, **caractérisé en ce que** le sectionnement s'effectue à l'aide d'une lame (42), qui pendant l'exercice de la force de traction agissant sur l'endroit désigné (20) pour le sectionnement est guidée à travers le boudin (11) arrivant, de sorte que le boudin (11) arrivant suive la force de traction, au moins d'un côté, de préférence des deux côtés de l'endroit sectionné et qu'après le sectionnement, donne naissance à un fossé (48) qui est plus large que l'épaisseur de la lame (42).

25. Procédé selon la revendication 24, **caractérisé en ce qu'**après le sectionnement du boudin (11) arrivant, la lame (42) est libérée, à savoir à l'aide d'un déplacement qui comporte une composante le long d'une direction de la force de traction.

26. Procédé selon la revendication 24 ou 25, **caractérisé en ce qu'**on bascule la lame (42) pour la libération.

27. Procédé selon l'une quelconque des revendications 24 à 26, **caractérisé en ce que** pour le sectionnement, on chauffe la lame (42) à une température comprise entre 40 °C et 70 °C, prioritairement entre 40 °C et 60 °C, particulièrement autour de 50 °C.

28. Procédé selon l'une quelconque des revendications 19 à 27, **caractérisé en ce qu'**on réalise l'étirage en longueur du boudin (11) arrivant à raison d'une extension longitudinale comprise entre 1 % et 10 %, de préférence de 2 % à 6 %, de manière particulièrement préférentielle, d'environ 4 %.

29. Procédé selon l'une quelconque des revendications 19 à 28, **caractérisé en ce que** le sectionnement s'effectue en évitant l'utilisation d'un additif de glissement alcoolisé.
